(19) Europäisches Patentamt
European Patent Office
Office européen des brevets

(11) **EP 3 390 997 B1**

(12) **EUROPÄISCHE PATENTSCHRIFT**

(45) Veröffentlichungstag und Bekanntmachung des Hinweises auf die Patenterteilung:
**06.05.2020 Patentblatt 2020/19**

(51) Int Cl.:
***G01K 13/02*** *(2006.01)*   ***G01K 15/00*** *(2006.01)*

(21) Anmeldenummer: **16797533.3**

(86) Internationale Anmeldenummer:
**PCT/EP2016/077777**

(22) Anmeldetag: **15.11.2016**

(87) Internationale Veröffentlichungsnummer:
**WO 2017/102224 (22.06.2017 Gazette 2017/25)**

(54) **VORRICHTUNG UND VERFAHREN ZUR SICHEREN UND GENAUEN BESTIMMUNG DER TEMPERATUR EINES MEDIUMS**

DEVICE AND METHOD FOR RELIABLY AND PRECISELY DETERMINING THE TEMPERATURE OF A MEDIUM

DISPOSITIF ET PROCÉDÉ DE DÉTERMINATION FIABLE ET PRÉCISE DE LA TEMPÉRATURE D'UN MILIEU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2015 DE 102015122004**

(43) Veröffentlichungstag der Anmeldung:
**24.10.2018 Patentblatt 2018/43**

(73) Patentinhaber: **Endress+Hauser Wetzer GmbH+Co. KG**
**87484 Nesselwang (DE)**

(72) Erfinder:
• **IRRGANG, Klaus**
**98716 Geraberg (DE)**
• **SCHALLES, Marc**
**99097 Erfurt (DE)**

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
EP-A1- 0 775 897        DE-A1- 19 939 757
DE-B3-102009 058 282    DE-B3-102012 103 952

EP 3 390 997 B1

**Beschreibung**

Die Erfindung betrifft eine Vorrichtung zur sicheren und genauen Bestimmung der Temperatur eines Mediums in einem Behälter oder Rohr, welche in eine Behälter- oder Rohrwand einbaubar oder einsetzbar ist, mit zwei verschiedenartigen Temperatursensoren, die in einem geschlossenen Messrohr angeordnet sind. Ferner betrifft die Erfindung ein Verfahren, in welchem die Vorrichtung in mehreren Verfahrensschritten zur sicheren und genauen Bestimmung der Temperatur eines Mediums verwendet wird.

Bei dem Medium kann es sich beispielsweise um eine Flüssigkeit oder ein Gas handeln.

Eingebaute Berührungsthermometer werden von der E+H Gruppe sowie von der Temperaturmesstechnik Geraberg GmbH in unterschiedlichen Ausgestaltungen angeboten und vertrieben. Derartige Vorrichtungen weisen in der Regel einen als Einbaufehler bezeichneten Fehler auf, bei dem es sich um einen systematischen, statisch-thermischen Messfehler beim Messen der Temperatur mit eingebauten Berührungsthermometern handelt. Er rührt daher, dass die an der Messstelle vorliegende Temperatur nicht identisch zur Temperatur des Mediums ist. Der Einbaufehler ist in der VDI/VDE Richtlinie 3511, Kapitel 3 beschrieben.

Der Einbaufehler liegt im Falle eines Berührungsthermometers vor, das einen Temperatursensor innerhalb eines Messrohrs aufweist, wobei das Messrohr zur Messung der Temperatur in das Medium hineinragt. An dem dem Prozess zugewandten Ende des Messrohrs ist das Messrohr durch einen Messrohrboden geschlossen. Das Messrohr enthält die temperatursensitive Komponente, die die Temperatur misst. Die sensitive Komponente steht nur indirekt in Kontakt mit dem Medium, da nur die Außenwände des Messrohrs im thermischen Gleichgewicht mit dem Medium stehen (d.h. dieselbe Temperatur aufweisen). Das Messrohr weist einen Prozessanschluss auf. Der Prozessanschluss befindet sich an dem dem Prozess abgewandten Ende des Messrohrs und liegt daher außerhalb des Behälters oder Rohrs, in dem sich das Medium befindet. Damit befindet sich der Prozessanschluss im thermischen Gleichgewicht mit der Umgebung (bzw. mit der Rohr- oder Behälterwand).

Der Einbaufehler wird durch einen Wärmestrom innerhalb des geschlossenen Messrohrs verursacht, der sich dadurch einstellt, dass der Prozessanschluss im thermischen Gleichgewicht mit der Umgebung (bzw. der Behälter- oder Rohrwand) ist, und dass das dem Prozess zugewandte Ende des Messrohrs (bzw. die Messrohrwand) im thermischen Gleichgewicht mit dem Medium steht.

Im Falle eines wärmeren Mediums und eines kälteren Prozessanschlusses ist der Wärmestrom vom Boden des Messrohrs zum Prozessanschluss hin gerichtet und führt zu einem Abtransport von Wärme vom Temperatursensor. Im Falle eines kälteren Mediums und eines wärmeren Prozessanschlusses strömt Wärme in die entgegengesetzte Richtung zu dem Temperatursensor hin. In jedem Fall ergibt sich durch den Wärmestrom innerhalb des Messrohrs eine Verfälschung. Diese Verfälschung kann ein Vielfaches der zulässigen Toleranz des Temperatursensors betragen. Besonders groß ist diese Verfälschung, wenn dickwandige Messrohre wie beispielsweise metallische Schutzrohre benutzt werden und insbesondere wenn beim Wärmeübergang vom Medium auf das Messrohr ein geringer Wärmeübergangswert $\alpha$ vorliegt.

Im Falle eines geschlossenen, länglichen Messrohrs, dessen Längsachse senkrecht zum Behälter des Mediums ist (bzw. senkrecht zur Wand des Rohrs, durch das das Medium fließt), ist der Wärmestrom, welcher sich aufgrund der Temperaturdifferenz zwischen Medium und Prozessanschluss einstellt, entlang der Längsachse des Messrohrs gerichtet. Eine Korrektur des Einbaufehlers kann in diesem Fall durch bauliche Maßnahmen erreicht werden, indem mehrere Temperatursensoren entlang der Längsachse des Messrohrs versetzt angeordnet sind. Es wird dann eine korrigierte Temperatur anhand der Messwerte der versetzten Temperatursensoren ermittelt.

Im Stand der Technik sind verschiedene Vorrichtungen mit mehreren längsversetzten Temperatursensoren offenbart.

In einer Klasse dieser Vorrichtungen dienen die längsversetzten Temperatursensoren der Ermittlung des Temperaturprofils bzw. der Temperaturverteilung innerhalb eines Mediums und nicht der Einbaufehlerkorrektur. Die DE 195 448 80 A1 offenbart beispielsweise mehrere Thermoelemente in einem Messrohr. Das Messrohr weist dabei mehrere Durchströmkanäle auf. Die DE 195 09 105 C2 offenbart ein Messrohr mit mehreren Temperatursensoren, wobei die Temperatursensoren an der Außenwand des Messrohrs angebracht sind. In diesen Offenbarungen steht das Medium also an verschiedenen Stellen im direkten Kontakt mit den Temperatursensoren. So kann das Temperaturprofil innerhalb des Mediums ermittelt werden. Eine Einbaufehlerkorrektur wird in dieser Klasse von Vorrichtungen dagegen nicht vorgenommen, da eine andere Wärmeableitungsphysik als bei einem geschlossenen Messrohr vorherrscht. Da während der Messung kein gerichteter Wärmstrom innerhalb eines geschlossenen Messrohrs vorliegt, liegt der Einbaufehler hier nicht vor.

Eine Vorrichtung zur Einbaufehlerkorrektur ist in der DE 199 39 757 A1 offenbart. EP 0 775 897 A1 offenbart eine Vorrichtung zur Korrektur einer altersbedingten Drift. Es werden zwei oder mehr Temperatursensoren innerhalb der Längsachse des Messrohrs versetzt angeordnet. Es handelt sich dabei um identische, widerstandsbasierte Temperatursensoren.

Prinzipiell gilt: je mehr Temperatursensoren im geschlossenen Messrohr versetzt angeordnet sind, desto genauer kann der Einbaufehler korrigiert werden. In der Praxis ist es dagegen außerordentlich vorteilhaft, wenn nicht mehr als zwei Temperatursensoren verwendet werden. Aufgrund des geringeren Platzbedarfs ermöglicht die Verwendung zweier Temperatursensoren die Verwendung von Messrohren mit standardisierten Abmessungen. Des Weiteren ermöglicht die Verwendung zweier Temperatursensoren eine vereinfachte Korrekturformel und damit einhergehend eine vereinfachte Signalverarbeitung. Die Verwendung von nur zwei Temperatursensoren ermöglicht damit also insbesondere eine besonders kostengünstige Realisierung der Einbaufehlerkorrektur.

Die Messwerte der beiden Temperatursensoren werden dabei von einer Auswerte-/Transmittereinheit ausgewertet und übermittelt. Derjenige der beiden Temperatursensoren, der näher zum Messrohrboden angeordnet ist, wird dabei als Hauptsensor bezeichnet. Anhand der Messwerte der beiden Temperatursensoren lässt sich die um den Einbaufehler korrigierte Temperatur $T_{H,korr}$ des bodennähren Hauptsensors folgendermaßen aus dem Messwerten $T_H$ des Hauptsensors und $T_N$ des Nebensensors bestimmen (K. Irrgang, L. Michalowsky "Temperaturmesspraxis mit Widerstands-thermometern und Thermoelementen", Vulkan-Verlag, Essen, 2004)

$$T_{H,korr} = T_H + K_H \cdot (T_H - T_N) = T_H + K_H \ \Delta T$$

wobei

$$\Delta T = \ T_H - T_N$$

Der Korrekturfaktor zur Korrektur des Hauptsensors $K_H$ ist dabei in einer Auswerte-/Transmittereinheit hinterlegt. Er ist durch die Abmessungen und das verwendete Material der Vorrichtung bestimmt und nach dem Typ des Mediums in der Auswerte-/Transmittereinheit vorklassifiziert. Analog dazu lässt sich der um den Einbaufehler korrigierte Wert des zweiten Temperatursensors, welcher als Nebensensor bezeichnet wird, ermitteln. Dafür wird ein zweiter, vom ersten Korrekturfaktor $K_H$ verschiedener Korrekturfaktor $K_N$ verwendet.

$$T_{N,korr} = T_N + K_N \cdot (T_H - T_N) = T_N + K_N \ \Delta T$$

Diese einfachen Korrekturformeln benötigen in vorteilhafter Weise nur eine sehr geringe Rechenkapazität in der Auswerte-/Transmittereinheit.

Die Verwendung zweier identischer widerstandsbasierter Temperatursensoren zur Einbaufehlerkorrektur kann jedoch von großem Nachteil sein, da eine derartige Vorrichtung sehr empfindlich gegenüber Beschädigungen am Messrohr und an der Isolation der Messkreise der beiden widerstandsbasierten Sensoren ist.

Derartige Beschädigungen können beispielsweise durch Feuchtigkeitsänderungen im Messrohr verursacht werden. Die hygienischen Anforderungen im Lebensmittelbereich erfordern zyklische Heißdampfreinigungen der Anlagen. Aufgrund der hohen Temperaturgradienten im Heißdampfstrahl kann es immer wieder zu Feuchtigkeitseinbrüchen in das Messrohr kommen. Das Eindringen von Feuchtigkeit führt zu einer Änderung der Isolation der elektrischen Messkreise der Temperatursensoren im Messrohr. Im Falle einer Isolationsänderung ändern sich die Messwerte von identischen Temperatursensoren im gleichen Maße. Die Änderung der Messwerte der Temperatursensoren aufgrund einer Isolationsänderung ist daher nicht von einer Änderung der Messwerte aufgrund einer Änderung der Temperatur des Mediums zu unterscheiden. Daher bleiben Beschädigungen über das Messrohr bzw. über die Messkreise der Temperatursensoren bei der Verwendung zweier identischer, längs des Messrohrs versetzter Temperatursensoren unerkannt. Dies stellt einen großen Nachteil dar und verhindert insbesondere den Einsatz für Anwendungen, welche eine hohe funktionale Sicherheit verlangen. Die funktionale Sicherheit wird in der Regel anhand verschiedener Stufen oder sogenannter "Saftety Integrity Level" (SIL) klassifiziert. Je nach Einsatzgebiet werden hohe SIL Stufen erfordert.

Im Stand der Technik sind auch Messrohre angegeben, welche durch zwei oder mehrere unterschiedliche Temperatursensoren eine hohe funktionale Sicherheit oder eine Korrektur einer altersbedingten Drift eines widerstandsbasierten Temperatursensors erreichen. Eine solche Vorrichtung ist beispielsweise in der DE 10 2009 058 282 und in der DE 10 2012 103 9 52 offenbart. Diese Vorrichtungen offenbaren hingegen keine Möglichkeit zur Einbaufehlerkorrektur. Da die Temperatursensoren nicht entlang der Längsachse versetzt angeordnet sind, kann nicht der durch die Wärmeableitung hervorgerufene Einbaufehler korrigiert werden.

Eine Möglichkeit zur Einbaufehlerkorrektur bei gleichzeitiger hoher funktionaler Sicherheit ist im oben genannten Stand der Technik nicht offenbart.

Der Erfindung liegt also die Aufgabe zugrunde, eine kostengünstige und platzsparende Vorrichtung anzugeben, die gleichzeitig eine hohe funktionale Sicherheit gewährleistet und die Möglichkeit zur Korrektur des Einbaufehlers bietet.

Die Aufgabe wird durch die Bereitstellung einer Vorrichtung zur Bestimmung der Temperatur in einem Rohr oder Behälter gelöst, wobei die Vorrichtung in eine Rohr- oder Behälterwand einbaubar oder einsetzbar ist, mit einem in das Medium hineinragenden Messrohr, welches an dem dem Medium zugewandten Ende durch einen Messrohrboden geschlossen ist, und welches einen widerstandsbasierten Temperatursensor als Hauptsensor und einem thermospannungsbasierten Temperatursensor als Nebensensor aufweist. Haupt- und Nebensensor sind innerhalb des Messrohrs bezüglich der Längsachse des Messrohrs mit einem festen Versatz zueinander angeordnet, und übermitteln ihre Messwerte einer Auswerte-/Transmittereinheit. Der Hauptsensor ist näher zum Messrohrboden angebracht als der Nebensensor. Der Prozessanschluss befindet sich an dem dem Prozess abgewandten Ende des Messrohrs außerhalb des Mediums. Hauptsensor und Nebensensor besitzen jeweils einen elektrischen Messkreis. Die Messkreise weisen gegenüber dem Messrohr eine elektrische Isolation auf. Die Änderungen der elektrischen Isolation der Messkreise beeinflussen die Messwerte des Haupt- und Nebensensors jeweils unterschiedlich. Falls der Betrag der Differenz der Messwerte $|\Delta T|$ einen ersten vorgegebenen Grenzwert $\Delta T_{max}$ überschreitet, generiert die Auswerte-/Transmittereinheit eine Fehlermeldung über die Integrität bezüglich der elektrischen Isolation der Vorrichtung. Weiterhin ist die Vorrichtung dazu ausgestaltet, mittels des entlang der Längsachse mit dem festen Versatz zueinander angeordneten Hauptsensors und Nebensensors einen Einbaufehler zu korrigieren.

Ändert sich der Isolationswiderstand, hat dies auf den Messwert des widerstandbasierten Sensors einen erheblichen Einfluss, während dagegen der Messwert des thermospannungsbasierten Nebensensors kaum bzw. im vernachlässigbarem Maße beeinflusst wird, so dass bei der Verwendung der auf den beiden unterschiedlichen Messprinzipien basierenden Temperatursensoren eine hohe funktionale Sicherheit gewährleistet wird. Die Messkreise von Haupt- und Nebensensor können beispielsweise so ausgestaltet sein, dass der Messkreis des Nebensensors einen um eine Größenordnung bzw. um einen Faktor 10 geringeren Gesamtwiderstand als der Messkreis des Hauptsensors besitzt. Damit beeinflussen Änderungen der elektrischen Isolation der jeweiligen Messkreise die Messwerte des Haupt- und Nebensensors auch unterschiedlich. Der ständige Vergleich der Messwerte der beiden verschiedenartigen Temperatursensoren ermöglicht daher eine hohe funktionale Sicherheit.

Damit ist die erfindungsgemäße Anordnung im Gegensatz zu Vorrichtungen mit zwei widerstandsbasierten Temperatursensoren in einem Messrohr in der Lage, Beschädigungen der Integrität der Vorrichtung zu erkennen. Durch die längsversetzt angeordneten Temperatursensoren ist zudem gleichzeitig die Möglichkeit zur Einbaufehlerkorrektur gegeben.

Eine vorteilhafte Weiterbildung der Erfindung sieht vor, dass der widerstandsbasierte Sensor eine höhere Messgenauigkeit aufweist.

Eine weitere vorteilhafte Ausgestaltung der Erfindung sieht vor, dass der Hauptsensor eine höhere thermische Masse als der Nebensensor aufweist. Damit reagiert der Nebensensor schneller als der in der Nähe des Messrohrbodens befindliche Hauptsensor.

Diese Ausgestaltung ist besonders vorteilhaft, da eine weitere Fehlerquelle für die genaue Bestimmung der Temperatur des Mediums schnelle Temperaturänderungen im Medium darstellen können. Je nach Zeitskala der Temperaturänderungen im Medium und der Zeitskala der Reaktionszeit der Temperatursensoren können Temperaturänderungen im Medium zu einer Phasenverschiebung des Antwortsignals der beiden Temperatursensoren führen. Diese Phasenverschiebung wird als dynamischer Fehler bezeichnet.

Die Reaktionszeit eines Temperatursensors hängt im Wesentlichen von der thermischen Masse ab, welche wiederum im Rahmen dieser Anmeldung als Produkt der spezifischen Wärmekapazität $C_p$ und der Masse $m$ definiert ist. Reagiert nun der bodenfernere Nebensensor schneller als der bodennähre Hauptsensor, wird eine gewisse Kompensation des dynamischen Fehlers erreicht. Eine derartige Kompensation des dynamischen Fehlers ist bei der Verwendung zweier baugleicher widerstandsbasierter Temperatursensoren identischer Ausführung a priori ausgeschlossen.

In einer vorteilhaften Weiterbildung der Erfindung ist der Anschluss des widerstandsbasierten Hauptsensors an die Auswerte-/Transmittereinheit in einer Dreileiterschaltung realisiert. In einer Variante der Weiterbildung ist der Anschluss des Hauptsensors in einer Vierleiterschaltung realisiert. Die Dreileiterschaltung ist hier im besonderen Maße vorteilhaft, da sie nur sehr wenig Platz innerhalb des Messrohrs beansprucht und die Signalverarbeitung in effizienter Art und Weise leistet.

Die Variante der Dreileiterschaltung kann dabei in folgender Weise realisiert werden: der bodennähere Hauptsensor weist zwei Anschlussleiter aus einem Material A auf. Der erste Anschlussleiter ist mit einem ersten Innenleiterpaar verbunden, wobei das erste Innenleiterpaar aus dem gleichem Material A besteht. Der zweite Anschlussleiter ist mit einem zweiten Innenleiterpaar verbunden. Das zweite Innenleiterpaar besteht dabei aus einem ersten Innenleiter aus dem Material A und aus einem zweiten Innenleiter aus einem zweiten, vom ersten Material A verschiedenen Material B. Durch diese Verbindung des Zwischenleiters aus dem Material A und des Innenleiterpaares mit Innenleitern aus dem Materialen A und B wird der Messpunkt des Thermoelements bzw. des Nebensensors gebildet.

In dieser besonders vorteilhaften Variante der Weiterbildung der Erfindung ist also der Thermomesspunkt des thermospannungsbasierten Nebensensors in die Verschaltung des Hauptsensors integriert; gleichzeitig ist der Anschluss des widerstandsbasierten Hauptsensors an die Auswerte-/Transmittereinheit in einer Dreileiterschaltung realisiert.

In einer Ausgestaltung der Erfindung ist das Messrohr als ein Schutzrohr ausgestaltet. In einer Weiterbildung dieser Ausgestaltung enthält das Schutzrohr ein auswechselbares Messeinsatzrohr, auf dem die Temperatursensoren angebracht sind. Diese Weiterbildung der Ausgestaltung ist in besonders hohem Maße vorteilhaft, da zur Wartung der Komponenten sowie ihrer Verschaltung das Messeinsatzrohr dem Schutzrohr entnommen werden kann.

In der Variante der Ausgestaltung der Erfindung mit Schutzrohr und/oder mit Messeinsatzrohr ist es zusätzlich vorgesehen, dass das Schutzrohr bzw. das Messeinsatzrohr einen Prüfkanal aufweist, wie er im Gebrauchsmuster DE 20 2009 012292 U1 beschrieben ist. Der Prüfkanal dient in der vorliegenden Anmeldung dazu, eine Anordnung von mehreren, zusätzlichen Temperatursensoren aufzunehmen, welche entlang der Längsachse des Messrohrs versetzt angeordnet sind.

Eine Ausgestaltung dieser Weiterbildung beinhaltet die Erhöhung der thermischen Ankoppelung des Hauptsensors an das Medium. Dies wird durch die Anbringung von einer Wärmeleitfolie am Boden des Messeinsatzrohrs erreicht. Vorteilhaft ist hier die Anbringung der Wärmeleitfolie an der zum Schutzrohr zeigenden Seite des Messeinsatzrohrbodens.

Eine weitere vorteilhafte Ausgestaltung der Erfindung sieht eine Zentrierung des Messeinsatzrohrs im Schutzrohr vor. Dies kann beispielsweise durch eine Modifikation der Bodenform des Messeinsatzrohrs erreicht werden, indem der Durchmesser des Bodens des Messeinsatzrohrs größer als der Durchmesser des Messeinsatzrohrs ist. Dadurch ist das Messeinsatzrohr im Schutzrohr geführt. Diese Zentrierung ist vorteilhaft für die Wärmeübertragung zwischen Schutzrohr und Messeinsatzrohr.

Die Aufgabe der sicheren und genauen Temperaturbestimmung wird dann anhand der folgenden Verfahrensschritte gelöst:

- In einem ersten Verfahrensschritt wird die Differenz der Messwerte von Haupt- und Nebensensor ($\Delta T$) von der Auswerte-/Transmittereinheit bestimmt, wobei $\Delta T = T_H - T_N$. In Abhängigkeit vom Ergebnis wird folgender zweiter Verfahrensschritt durchgeführt:

  a) Falls der Betrag der Differenz der Messwerte von Haupt- und Nebensensor ($|\Delta T|$) größer als ein erster vorgegebener Grenzwert ($\Delta T_{max}$) ist, wird eine Fehlermeldung über die Integrität der Isolation der Vorrichtung ausgegeben.

  b) Falls der Betrag der Differenz der Messwerte von Haupt- und Nebensensor ($|\Delta T|$) kleiner als ein zweiter vorgegebener Grenzwert ($\Delta T_{min}$) ist: Bestimmung der Temperatur des Mediums ($T_M$) als Temperatur des Hauptsensors ($T_H$)

  c) Falls der Betrag der Differenz der Messwerte von Haupt- und Nebensensor ($|\Delta T|$) im Bereich zwischen dem zweiten vorgegebenen Grenzwert ($\Delta T_{min}$) und dem ersten vorgegebenen Grenzwert ($\Delta T_{max}$) liegt:

  • Bestimmung der korrigierten Temperatur des Hauptsensors $T_{H,korr}$ gemäß $T_{H,korr} = T_H + K_H \Delta T$, wobei der Korrekturfaktor zur Korrektur des Hauptsensors $K_H$ in der Auswerte/Transmittereinheit hinterlegt ist
  • Bestimmung der korrigierten Temperatur des Nebensensors $T_{N,korr}$ gemäß $T_{N,korr} = T_N + K_N \Delta T$, wobei der Korrekturfaktor zur Korrektur des Nebensensors $K_N$ in der Auswerte/Transmittereinheit hinterlegt ist
  • Bestimmung der Temperatur des Mediums zu $T_M = \frac{1}{2} (T_{H,korr} + T_{N,korr})$

Im ersten Schritt wird also die Temperaturdifferenz ermittelt. Ein erster vorgegebener Grenzwert ($\Delta T_{max}$) für den Betrag der Differenz der Messwerte von Haupt- und Nebensensor, welcher eindeutig auf einen Isolationsmangel zurückzuführen ist, wird in der Auswerte-/Transmittereinheit hinterlegt. Durch die geeignete Wahl des Grenzwerts können daher Schädigungen der Isolation sicher erkannt werden.

Liegt der Betrag der Differenz der Messwerte von Haupt- und Nebensensor unterhalb des ersten vorgegebenen Grenzwerts ($\Delta T_{max}$), kann das Korrekturverfahren für die Einbaufehlerkorrektur angewendet werden. Stimmen die Messwerte allerdings schon vor der Korrektur innerhalb einer vorgegebenen Grenze überein, wird in dem erfindungsgemäßen Verfahren keine Einbaufehlerkorrektur vorgenommen. Falls der Betrag der Differenz der Messwerte von Haupt- und Nebensensor unterhalb eines zweiten vorgegebenen Grenzwerts ($\Delta T_{min}$) liegt, wird daher die Temperatur des Mediums ($T_M$) als Temperatur des Hauptsensors ($T_H$) bestimmt, da der Hauptsensor eine höhere Messgenauigkeit aufweist. Der zweite vorgegebene Grenzwert kann zum Beispiel doppelt so groß sein wie die Toleranz der Sensoren. Da der Nebensensor eine geringere Messgenauigkeit besitzt als der Hauptsensor, ist es ratsam, das Korrekturverfahren auszusetzen.

Liegt nun der Betrag der Differenz der Messwerte von Haupt- und Nebensensor ($|\Delta T|$) im Bereich zwischen dem zweiten vorgegebenen Grenzwert ($\Delta T_{min}$) und dem ersten vorgegebenen Grenzwert ($\Delta T_{max}$), dann werden sowohl die Messwerte des Haupt- und Nebensensors anhand der Formel für die Einbaufehlerkorrektur und die in der Auswerte-/Transmittereinheit hinterlegten Korrekturfaktoren für den Hauptsensor ($K_H$) und den Nebensensors ($K_N$) korrigiert.

Durch den bei einer Kalibrierung erfolgten Abgleich und die Bestimmung der Korrekturfaktoren sollten die beiden korrigierten Temperaturen von Haupt- und Nebensensor im Idealfall übereinstimmen. In der Praxis können sich aber auch die beiden korrigierten Werte unterscheiden. Durch die Mittelung der beiden korrigierten Temperaturwerte erfolgt daher ein gewisser Ausgleich.

Damit beschreibt das erfindungsgemäße Verfahren, wie die einzelnen Verfahrensschritte die technische Aufgabe der gleichzeitigen hohen funktionalen Sicherheit und der Einbaufehlerkorrektur realisieren können.

In dem hier beschriebenen Verfahren wird erst die Überwachung der Isolation, und dann eine anschließende Einbaufehlerkorrektur vorgenommen. Da die Einbaufehlerkorrektur von der Differenz der beiden Messwerte im gleichen Maße abhängt, ist dies Vorgehensweise insbesondere vorteilhaft, wenn zu erwarten ist, dass eine große Differenz der Messwerte von Haupt- und Nebensensor in erster Linie durch den Isolationsfehler bedingt sind, während der Einbaufehler einen wesentlich kleineren Beitrag zur Differenz der Messwerte leistet.

In einer zu dem erfindungsgemäßen Verfahren naheliegenden Variante kann auch erst die Einbaufehlerkorrektur vorgenommen werden, und dann die Isolationsüberwachung anhand der um den Einbaufehler korrigierten Messwerte vorgenommen werden. Die Wahl der Reihenfolge liegt dem Fachmann anhand der durch die Wahl der Merkmale der Vorrichtung zu erwartenden Größenordnungen der Fehler nahe. In einer weiteren zum erfindungsgemäßen Verfahren naheliegenden Variante ist auch eine gleichzeitige Überwachung der unkorrigierten und der korrigierten Werte von Haupt- und Nebensensor vorgesehen.

In einer Weiterbildung des erfindungsgemäßen Verfahrens wird eine zusätzliche Driftkontrolle ermöglicht. Während die Drift zweier baugleicher Temperatursensoren während der Anwendung nicht erkennbar ist, liegen bei den verschiedenartigen Temperatursensoren unterschiedliche Driftkurven vor. Insbesondere sieht das erfindungsgemäße Verfahren vor, dass der Nebensensor so ausgestaltet ist, dass er in dem vom Medium angenommen Temperaturbereich wesentlich langzeitstabiler als der Hauptsensor ist. Wesentlich langzeitstabiler ist hier dadurch definiert, dass die Rate der Drift des Nebensensors um mindestens eine Größenordnung bzw. einen Faktor 10 kleiner ist als die Rate der Drift des Hauptsensors.

In einer Weiterbildung des erfindungsgemäßen Verfahrens wird eine Driftkorrektur des &Hauptsensors immer dann vorgenommen, wenn der Nebensensor einen vorgegebenen Temperaturpunkt ($T_N^{kal.}$) durchläuft. Gleichzeitig muss immer überprüft werden, dass der Betrag der Differenz ($|\Delta T|$) der Messwerte von Haupt- und Nebensensor im Bereich zwischen dem zweiten vorgegebenen Grenzwert ($\Delta T_{min}$) und dem ersten vorgegebenen Grenzwert ($\Delta T_{max}$) liegt. Am vorgegebenen Temperaturpunkt (beispielsweise bei 80°C) ist die durch den Einbaufehler bedingte Abweichung zwischen dem Messwert des Haupt- und Nebensensors bekannt. Insbesondere ist der unkorrigierte Wert bekannt, welchen der Hauptsensor anzeigen sollte, wenn der Nebensensor den unkorrigierten Wert ($T_N^{kal.}$) durchläuft. Dieser unkorrigierte Wert wird hier als $T_H^{kal}$ bezeichnet.

Wird nun der vorgegebene Temperaturpunkt ($T_N^{kal.}$) vom Nebensensor durchlaufen, so kann überprüft werden, ob auch der dazugehörige unkorrigierte Wert des Hauptsensors den dazugehörigen theoretischen Wert ($T_H^{kal.}$) anzeigt. Eine davon verschiedene Abweichung muss an einer Drift des Hauptsensors liegen. Falls also die vom Hauptsensor angezeigte Temperatur um mehr als einen vorgegebenen Grenzwert vom zu dem vorgegebenen Temperaturpunkt des Nebensensor ($T_N^{kal.}$) gehörigen, unkorrigierten Temperaturwert des Hauptsensors ($T_H^{kal.}$) abweicht, wird eine Meldung über die Drift des Hauptsensors ausgegeben. Gleichzeitig wird der Messwert des Hauptsensors auf den zu dem vorgegebenen unkorrigierten Temperaturwert des Nebensensors ($T_N^{kal.}$) gehörigen, unkorrigierten Temperaturwert des Hauptsensors ($T_H^{kal.}$) nachgeführt. In dieser besonders vorteilhaften Weiterbildung ist die Vorrichtung also in der Lage, gleichzeitig eine Driftkorrektur und eine Einbaufehlerkorrektur vorzunehmen, und eine hohe funktionale Sicherheit zu garantieren.

Diese Weiterbildung des erfindungsgemäßen Verfahrens zur Driftkorrektur ist insbesondere dann besonders zuverlässig, wenn die Temperaturverteilung des Mediums am Messrohr bekannt ist. In einer vorteilhaften Variante dieser Weiterbildung kann die Driftkorrektur auch erfolgen, indem in einem Re-Kalibriervorgang (nach einer gewissen Einsatzzeit) das Messrohr dem Prozess entnommen wird und in einem Referenzmedium mit homogener Temperaturverteilung und bei einer vorgegebenen Referenztemperatur die Temperatur von Haupt- und Nebensensor bestimmt wird. Als Referenztemperatur wird dann die Temperatur, welche zu dem vorgegebenen Temperaturpunkt des Nebensensor ($T_N^{kal.}$) gehört, gewählt. Aufgrund der homogenen Temperaturverteilung des Referenzmediums ist das oben angegebene Verfahren im besonders hohen Maße geeignet, eine genaue Driftkontrolle bzw. Driftkorrektur der Drift des Hauptsensors zu leisten.

In einer alternativen Weiterbildung des erfindungsgemäßen Verfahrens wird die Driftkorrektur ermöglicht, indem der zeitliche Verlauf der Messwerte von Haupt- und Nebensensor in der Auswerte- und Transmittereinheit gespeichert wird. In einer dazu naheliegenden Variante wird der zeitliche Verlauf in einer mit der Auswerte- und Transmittereinheit verbundenen Leitwarte gespeichert.

In dieser alternativen Weiterbildung kann die Driftkorrektur anhand der Beobachtung des zeitlichen Verlaufs der Messwerte von Haupt- und Nebensensor in einer vorgegebenen Zeitspanne erfolgen. Auch hier muss gleichzeitig immer überprüft werden, dass der Betrag der Differenz der Messwerte von Haupt- und Nebensensor ($|\Delta T|$) im Bereich

zwischen dem zweiten vorgegebenen Grenzwert ($\Delta T_{min}$) und dem ersten vorgegebenen Grenzwert ($\Delta T_{max}$) liegt. Weicht nun der zeitliche Verlauf von einem parallelen Verlauf ab, muss eine Drift des Hauptsensors vorliegen. Insbesondere ist anhand eines Kriteriums ein vorgegebener Grenzwert für einen vom parallelen Verlauf abweichenden zeitlichen Verlauf gewählt. Ist dieser vorgegebene Grenzwert überschritten, wird eine Meldung über die Drift des Hauptsensors ausgegeben. Gleichzeitig wird der Messwert des Hauptsensors auf einen zu den Messwerten des Nebensensors parallelen Verlauf nachgeführt.

Die Erfindung stellt also eine Vorrichtung und ein Verfahren bereit, anhand derer in einer platzsparenden Realisierung gleichzeitig eine hohe funktionale Sicherheit, eine Korrektur des Einbaufehlers (welcher bei Temperatursensoren in geschlossenen Messrohren unvermeidlich ist) sowie eine Überwachung und Korrektur der Drift des widerstandsbasierten Hauptsensors ermöglicht wird. Diese drei Vorteile werden dadurch erreicht, dass zwei unabhängige Temperatursensoren entlang der Längsachse des Messrohrs versetzt die Temperatur messen, und dass die dabei verwendeten Temperatursensoren auf einem widerstandsbasierten und auf einem thermospannungsbasierten Messprinzip beruhen.

Die Erfindung wird anhand der nachfolgenden Figuren näher erläutert. Es zeigt:

Fig. 1: ein Ausführungsbeispiel der in die Behälter- oder Rohrwand eingebauten erfindungsgemäßen Vorrichtung

Fig. 2: eine bevorzugte Ausgestaltung der erfindungsgemäßen Vorrichtung, in der die elektrischen Anschlüsse des Hauptsensors an die Auswerte-/Transmittereinheit in Dreileiterschaltung realisiert sind.

Fig. 3: eine Ausgestaltung der erfindungsgemäßen Vorrichtung als Schutzrohr und Messeinsatzrohr

Fig. 4: den zeitlichen Verlauf der Messwerte von Haupt- und Nebensensor im Falle einer Drift des Hauptsensors

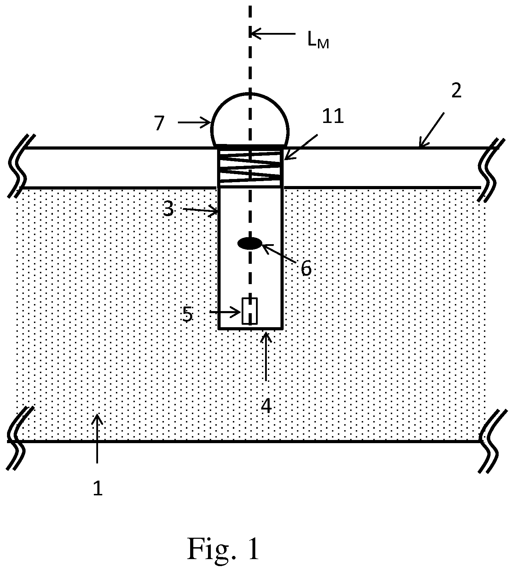

Fig. 1 zeigt ein Ausführungsbeispiel der erfindungsgemäßen Vorrichtung. Das über einen Prozessanschluss 11 in die Behälter- oder Rohrwand 2 eingebaute geschlossene Messrohr 3 misst die Temperatur des Mediums 1 und ragt dazu in das Medium 1 hinein. Der Boden 4 des Messrohrs 3 befindet sich an dem dem Medium 1 zugewandten Ende des Messrohrs 3. Es werden zwei Temperatursensoren verwendet, wobei ein widerstandsbasierter Temperatursensor als Hauptsensor 5 in der Nähe des Bodens 4 des Messrohrs 3 angebracht ist, und ein Thermoelement als Nebensensor 6 entlang der Längsachse $L_M$ des Messrohrs 3 versetzt angebracht ist. Die beiden Temperatursensoren messen die Temperatur und stellen ihre Messwerte einer Auswerte-/Transmittereinheit 7 bereit, welche die Temperatur des Mediums 1 anhand der ihr übermittelten Messwerte ermittelt, ausgibt, und dann über eine drahtgebundene oder drahtlose Messübertragungsstrecke einer Leitwarte bereitstellt. Die Auswerte-/Transmittereinheit 7 befindet sich jenseits der Behälter- oder Rohrwand 2 des Behälters oder Rohrs, in dem das Medium 1 enthalten ist, dessen Temperatur sicher und genau bestimmt werden soll.

Tritt Feuchtigkeit in das Messrohr 3 ein, dann sinkt der Isolationswiderstand der Messkreise deutlich. Der Isolationswiderstand $R_{iso}$ kann anfangs beispielsweise auf 100 k$\Omega$ absinken. Steht das Messrohr 3 vollständig unter Wasser, kann der Isolationswiderstand sogar auf 10 K$\Omega$ absinken. Es zeigt sich folgender Einfluss auf den absoluten Fehler der Temperaturmesswerte von Hauptsensor 5 und Nebensensor 6, für jeweils zwei mögliche Varianten für den Hauptsensor 5 (ein Pt 200 Thermometer sowie einen 2 k$\Omega$ Thermistor).

| Messfehler bei Verringerung des Isolationswiderstandes | | Temperaturfehler für $R_{iso}$=100 k$\Omega$ | Temperaturfehler für $R_{iSO}$=10 k$\Omega$ |
|---|---|---|---|
| Nebensensor | | 0,1 K | 1,2 K |
| Hauptsensor | Pt 200 | 3,6 K | 36 K |
| | 2 k$\Omega$ | 10 K | 100K |

Aus dieser Tabelle ist ersichtlich, dass bei Standardbeschaltungen eine Verringerung des Isolationswiderstandes auf den Messwert des widerstandsbasierten Hauptsensors 5 einen erheblichen Einfluss hat, während sie beim thermospannungsbasierten Nebensensor 6 dagegen kaum im Messwert bemerkbar ist.

Durch die geeignete Wahl des vorgegebenen Grenzwerts $\Delta T_{max}$ können daher Beschädigungen der Isolation sicher erkannt werden. Die Wahl des vorgegebenen Grenzwerts $\Delta T_{max}$ liegt dem Fachmann in Abhängigkeit des verwendeten widerstandbasierten Hauptsensors 5 und der damit zu erwartenden Größenordnung einer Temperaturdifferenz aufgrund eines Isolationsmangels nahe. Damit ist die vorliegende Anordnung, im Gegensatz zu Vorrichtungen mit zwei widerstandsbasierten Temperatursensoren in einem Messrohr 3, erfindungsgemäß in der Lage, Beschädigungen der Integrität der Vorrichtung zu erkennen. Die Vorrichtung ist daher geeignet, bei funktionaltechnischen Sicherheitsbetrachtungen ein hohes SIL zu erreichen.

Für jeden der beiden Temperatursensoren ist ein Korrekturfaktor $K_H$ bzw. $K_N$ in der Auswerte-/Transmittereinheit 7 hinterlegt. In der Auswerte-/Transmittereinheit 7 muss vom Anwender vor der Inbetriebnahme, die Ausgestaltung der Vorrichtung (bzw. ob mit oder ohne auswechselbares Messeinsatzrohr 9), sowie eine Spezifikation nach flüssigen und gasförmigen Medien ausgewählt werden. Durch eine Klassifikationstabelle der folgenden Art, die in der Auswerte-/Transmittereinheit 7 hinterlegt ist, können bei Inbetriebnahme dann die Korrekturfaktoren ausgewählt werden.

| Medium | Ø Schutzrohr [mm] (und Ø Messeinsatzrohr) | Mit Messeinsatzrohr | Ohne Messeinsatzrohr |
|---|---|---|---|
| Öl | 4.5 | | |
| | 6 | | |
| | 9 | | |
| Milch | 4.5 | $K_H$, $K_N$ | |
| | 6 | | |
| | 9 | | |
| Wasser | 4.5 | | |
| | 6 | | |
| | 9 | | |

Zusätzlich können die Korrekturfaktoren an mindestens einem Arbeitspunkt überprüft und nachjustiert werden, wobei dazu ein ausreichend homogenes Medium bzw. ein Medium mit einer ausreichend homogenen Temperaturverteilung verwendet werden sollte. Verschiedene Arbeitspunkte sind hier durch die Wahl der Eintauchtiefe des Messrohrs 3 und durch die Wahl des Mediums 1, der Temperatur des Mediums 1 und der Umgebung, sowie durch die Geometrie des Messrohrs 3 (bzw. des Schutzrohrs 8 und des Messeinsatzrohrs 9), definiert, da diese Parameter im Wesentlichen den Einbaufehler bestimmen.

Mit $\Delta T = (T_H - T_N)$ gilt dann

$$T_{H,korr} = T_H + K_H \cdot \Delta T$$

$$T_{N,korr} = T_N + K_N \cdot \Delta T$$

In dem erfindungsgemäßen Verfahren sollte das Korrekturverfahren nur angewendet werden, wenn die Temperaturdifferenzen nicht durch eine Änderung des Isolationswiderstandes verursacht werden - dies ist durch die geeignete Wahl des ersten vorgegebenen Grenzwerts $\Delta T_{max}$ gegeben.

Auch sollte das Korrekturverfahren ausgesetzt werden, wenn die unkorrigierten Messwerte von Haupt- 5 und Nebensensor 6 innerhalb einer gewissen Toleranz übereinstimmen - dies ist durch die geeignete Wahl des zweiten vorgegebenen Grenzwerts $\Delta T_{min}$ gegeben.

Durch den mindestens einen Arbeitspunkt sind dann die beiden Korrekturfaktoren $K_H$ und $K_N$ für Haupt- 5 und Nebensensor 6 so eingestellt, dass die beiden korrigierten Temperaturen in Bezug auf den Kalibrierzustand übereinstimmen. Mit anderen Worten, nach der Kalibrierung gilt an dem Arbeitspunkt der folgende Zusammenhang zwischen den beiden korrigierten Temperarturwerten von Haupt- und Nebensensor

$$T_{H,korr} = T_{N,korr}$$

Durch Umformung lässt sich dieser Zusammenhang auf einen dazu äquivalenten Zusammenhang zwischen den beiden Korrekturfaktoren am Arbeitspunkt zurückführen.

$$K_N = 1 + K_H$$

Am Kalibrierpunkt gilt also der in obigen Formel beschriebene exakte Zusammenhang zwischen den Korrekturfaktoren $K_H$ und $K_N$. Je mehr allerdings die im Einsatz herrschenden Bedingungen (Temperaturen, Eintauchtiefen usw.) von dem Arbeitspunkt abweichen, desto eher werden die anfangs definierten Korrekturfaktoren (welche theoretisch die gemessene Temperatur des Hauptsensors 5 und die gemessene Temperatur des Nebensensors 6 auf denselben korrigierten Temperaturwert korrigieren sollten), voneinander abweichende korrigierte Werte liefern. Solange eine isolationsfehlerbedingte Differenz ausgeschlossen ist (was durch die geeignete Wahl des Grenzwertes $\Delta T_{max}$ gewährleistet ist), können verschiedene korrigierte Temperaturen $T_{H,korr}$ und $T_{N,korr}$ zum Beispiel dadurch verursacht werden, dass ein verbleibender dynamischer Fehler bzw. eine Phasenverschiebung zwischen Haupt- 5 und Nebensensor 6 vorliegt.

Daher wird in jedem Fall die genaue Temperatur des Mediums 1 als Mittelwert der beiden korrigierten Temperaturwerte von Haupt- 5 und Nebensensor 6 bestimmt:

$$T_M = \tfrac{1}{2}\,(T_{H,korr} + T_{N,korr})$$

In der Variante der Ausgestaltung der Erfindung mit einem Prüfkanal im Schutzrohr 8 und/oder im Messeinsatzrohr 9 ist es zusätzlich vorgesehen, die Messwerte der zusätzlichen Temperatursensoren im Prüfkanal für einen zusätzlichen (nicht-initialen) Kalibriervorgang zu verwenden. In diesem zusätzlichen (nicht-initialen) Kalibriervorgang wird der Korrekturfaktor K zur Einbaufehlerkorrektur überprüft und/oder genauer bestimmt. Dabei wird bei der Verwendung von drei zusätzlichen Temperatursensoren eine höhere Genauigkeit bei der Bestimmung des Korrekturfaktors K erreicht. Diese Variante der Erfindung eignet sich insbesondere für Fälle, in denen eine genaue Kenntnis des Korrekturfaktors K wünschenswert ist, beispielsweise in Anwendungsbereichen mit erhöhten Genauigkeitsanforderungen und/oder für Situation, in denen der Einbaufehler verhältnismäßig groß ist. Dies ist beispielsweise der Fall, wenn beim Wärmeübergang vom Medium 1 auf das Messrohr 3 ein geringer Wärmeübergangswert $\alpha$ vorliegt.

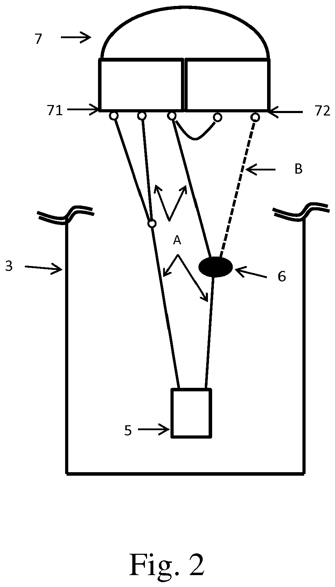

Fig. 2 zeigt eine vorteilhafte Ausgestaltung der Erfindung, in der der elektrische Anschluss des Hauptsensors 5 an die Auswerte-/Transmittereinheit 7 mit drei Leitern realisiert ist. Dabei weist der bodennähere Hauptsensor 5 zwei Anschlussleiter aus einem Material A auf. Der erste Anschlussleiter ist mit einem ersten Innenleiterpaar aus dem gleichem Material A verbunden. Der zweite Anschlussleiter ist mit einem zweiten Innenleiterpaar verbunden. Das zweite Innenleiterpaar besteht dabei aus einem ersten Innenleiter aus dem Material A und aus einem zweiten Innenleiter aus einem zweiten, vom ersten Material verschiedenen Material B. Die Anschluss- und Innenleiter aus dem Material A sind als durchgängige Linie dargestellt, der Innenleiter aus dem Material B ist als gestrichelte Linie dargestellt. Durch die Verbindung des Zwischenleiters aus dem Material A und des Innenleiterpaares mit Innenleitern aus dem Materialen A und B wird der Messpunkt des Thermoelements bzw. des Nebensensors 6 gebildet.

Einem ersten Eingang 71 der Auswerte-/Transmittereinheit 7 werden dann drei Leiter zugeführt: das erste Innenleiterpaar (bestehend aus den zwei Innenleitern aus dem Material A) sowie der Innenleiter aus dem Material A des zweiten Innenleiterpaares werden dem ersten Eingang zugeführt. Dieser Innenleiter aus dem Material A ist außerdem über eine Brücke mit einem zweiten Eingang 72 der Auswerte-/Transmittereinheit 7 verbunden. Als weiterer Leiter wird dem zweiten Eingang der Auswerte-/Transmittereinheit der Innenleiter aus dem Material B zugeführt. Dem ersten Eingang 71 der Auswerte-/Transmittereinheit 7 werden somit die Signale des widerstandsbasierten Hauptsensors 5 in einer Dreileiterschaltung übermittelt, dem zweiten Eingang 72 der Auswerte-/Transmittereinheit 7 werden die Signale des thermospannungsbasierten Nebensensors 6 übermittelt. In diesem Ausführungsbeispiel ist die elektrische Verschaltung der Anschlussdrähte von Haupt- 5 und Nebensensor 6 platzsparend realisiert, und damit in besonderem Maße vorteilhaft.

Wird die vorteilhafte Weiterbildung der Erfindung verwendet, in der die Rate der Drift des Nebensensors 6 in dem vom Medium angenommenen Temperaturbereich mindestens um eine Größenordnung (einen Faktor 10) kleiner ist als die Rate der Drift des Hauptsensors 5, muss eine geeignete Wahl der Materialen A und B für die Anschlussleiter und die Innenleiter getroffen werden. Wird beispielsweise als Material A Kupfer und als Material B Nickel verwendet, so wird ein Kupfer/Kupfer/Nickel Thermoelement gebildet. Für ein Kupfer/Kupfer/Nickel Thermoelement sind im Bereich bis 200°C keine Änderungen im Kristallgitter und keine interkristalline Korrosion in beiden Thermoschenkeln zu erwarten. Das bedeutet, dass das Thermoelement bzw. der Nebensensor 6 in dem vom Medium 1 angenommenen Temperaturbereich im Vergleich zum widerstandsbasierten Hauptsensor 5 eine vernachlässigbare Drift erfährt.

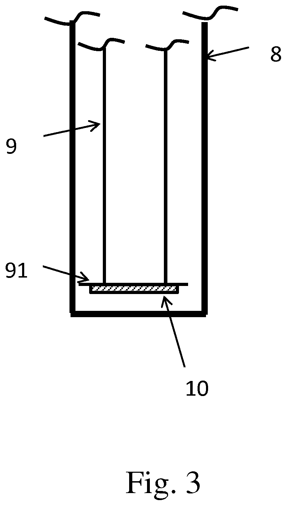

Fig. 3 zeigt das dickwandige Schutzrohr 8, welches das auswechselbare Messeinsatzrohr 9 enthält. Der Hauptsensor 5 und der Nebensensor 6 sind auf dem Messeinsatzrohr 9 angeordnet. Der Durchmesser des Bodens 91 des Messeinsatzrohrs 9 ist größer als der Durchmesser des Messeinsatzrohrs 9. Dadurch ist das Messeinsatzrohr 9 im Schutzrohr 8 geführt. Auf der zum Schutzrohr 8 zeigenden Seite des Messeinsatzrohrbodens 91 ist eine Wärmeleitfolie 10 angebracht.

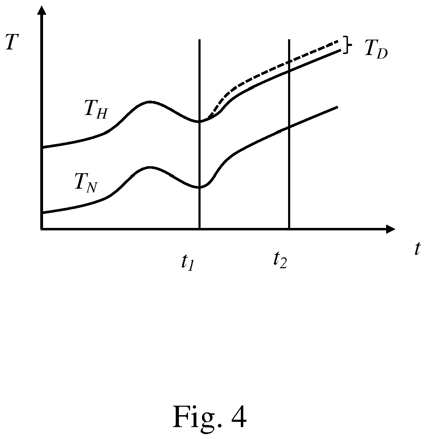

Fig. 4 zeigt den zeitlichen Verlauf der Messwerte der beiden unkorrigierten Werte von Hauptsensor 5 und Nebensensor 6. Vorausgesetzt, dass die Isolation intakt ist, laufen die unkorrigierten Messwerte in der Regel immer parallel. Im Zeitintervall zwischen dem Zeitpunkt $t_1$ und dem Zeitpunkt $t_2$ wird nun ein nicht paralleler Verlauf beobachtet.

Ein Kriterium für den nicht-parallelen Verlauf ist in der Auswerte-/Transmittereinheit 7 hinterlegt. Dieses kann beispielsweise eine nicht-konstante Differenzkurve der beiden zeitlichen Verläufe darstellen. Dass die Differenzkurve nicht konstant ist, wird dann dadurch detektiert, dass die Ableitung der Differenzkurve in dem Zeitintervall zwischen dem Zeitpunkt $t_1$ und dem Zeitpunkt $t_2$ einen vorgegebenen Grenzwert überschreitet.

Da der Nebensensor 6 im Vergleich zum Hauptsensor 5 in vernachlässigbarem Maße driftet, wird der nicht-parallele Verlauf ausschließlich durch eine Drift des Hauptsensors 5 verursacht. Nach dem Zeitintervall zwischen dem Zeitpunkt $t_1$ und dem Zeitpunkt $t_2$ wird eine Abweichungstemperatur $T_D$ festgestellt. Die Abweichungstemperatur $T_D$ entspricht dabei der Abweichung der unkorrigierten Temperatur des Hauptsensors 5 zu einem zu dem Nebensensor 6 parallelen Verlauf. Die Abweichungstemperatur $T_D$ ist damit also gerade die Drift $T_D$ des Hauptsensors 5. Wird eine Abweichungstemperatur $T_D$ festgestellt, dann wird eine Meldung über die Drift ausgegeben. Die Messwerte des Hauptsensors 5 werden auf einen zu den Messwerten des Nebensensors 6 parallelen Verlauf nachgeführt.

**Bezugszeichenliste**

| | |
|---|---|
| 1 | Medium |
| 2 | Rohr- oder Behälterwand |
| 3 | Messrohr |
| 4 | Messrohrboden |
| 5 | Hauptsensor |
| 6 | Nebensensor |
| 7 | Auswerte-/Transmittereinheit |
| 71 | erster Eingang der Auswerte-/Transmittereinheit |
| 72 | zweiter Eingang der Auswerte-/Transmittereinheit |
| 8 | Schutzrohr |
| 9 | Messeinsatzrohr |
| 91 | Boden des Messeinsatzrohrs |
| 10 | Wärmeleitfolie |
| 11 | Prozessanschluss |

| | |
|---|---|
| $L_M$ | Längsachse des Messrohrs |
| $R_{iso}$ | Isolationswiderstand |
| $\Delta T$ | Differenz der Messwerte von Haupt- und Nebensensor |
| $\lvert \Delta T \rvert$ | Betrag der Differenz der Messwerte von Haupt- und Nebensensor |
| $\Delta T_{max}$ | erster vorgegebener Grenzwert |
| $\Delta T_{min}$ | zweiter vorgegebener Grenzwert |
| $T_H$ | Messwert des Hauptsensors |
| $T_N$ | Messwert des Nebensensors |
| $T_M$ | Ermittelte Temperatur des Mediums |
| $T_{H,korr}$ | Um den Einbaufehler korrigierter Messwert des Hauptsensors |
| $T_{N,korr}$ | Um den Einbaufehler korrigierter Messwert des Nebensensors |
| $T_N^{kal.}$ | vorgegebener unkorrigierter Temperaturwert des Nebensensors, an dem der Hauptsensor kalibriert wird |
| $T_H^{kal.}$ | zu dem vorgegebenen unkorrigierten Temperaturwert des Nebensensors gehöriger Temperaturwert des Hauptsensors |
| $K_H$ | Korrekturfaktor zur Einbaufehlerkorrektur des Hauptsensors |
| $K_N$ | Korrekturfaktor zur Einbaufehlerkorrektur des Nebensensors |
| $t_1$ | Startzeitpunkt der Drift des Hauptsensors |
| $t_2$ | Endzeitpunkt der Drift des Hauptsensors |
| $T_D$ | Abweichungstemperatur durch Drift des Hauptsensors |

**Patentansprüche**

1. Vorrichtung zur Bestimmung der Temperatur eines Mediums (1) in einem Rohr oder in einem Behälter, wobei die Vorrichtung in eine Rohr- oder Behälterwand (2) einbaubar oder einsetzbar ist, mit einem in das Medium (1) hineinragenden Messrohr (3), das an dem dem Medium (1) zugewandten Ende durch einen Messrohrboden (4) geschlossen ist,

mit einem widerstandsbasierten Temperatursensor als Hauptsensor (5) und einem thermospannungsbasierten Temperatursensor als Nebensensor (6),

wobei der Hauptsensor (5) und Nebensensor (6) ihre Messwerte einer Auswerte-/Transmittereinheit (7) übermitteln, wobei der Hauptsensor (5) und Nebensensor (6) innerhalb des Messrohrs (3) bezüglich der Längsachse des Messrohrs (3) mit einem festen Versatz zueinander angeordnet sind und der Hauptsensor (5) näher zum Messrohrboden (4) angebracht ist als der Nebensensor (6),

wobei der Hauptsensor (5) und Nebensensor (6) jeweils einen elektrischen Messkreis besitzen welche gegenüber dem Messrohr (3) eine elektrische Isolation aufweisen,

wobei Änderungen der elektrischen Isolation der Messkreise die Messwerte des Hauptsensors (5) und Nebensensors (6) jeweils unterschiedlich beeinflussen,

und wobei die Auswerte-/Transmittereinheit (7) dazu ausgestaltet ist, eine Fehlermeldung über die Integrität der Vorrichtung bezüglich der elektrischen Isolation zu generieren falls der Betrag der Differenz ($|\Delta T|$) der Messwerte von Hauptsensor (5) und Nebensensors (6) einen ersten vorgegebenen Grenzwert ($\Delta T_{max}$) überschreitet

und wobei die Vorrichtung dazu ausgestaltet ist, mittels des entlang der Längsachse mit dem festen Versatz zueinander angeordneten Hauptsensors (5) und Nebensensors (6) einen Einbaufehler (EF) zu korrigieren.

2. Vorrichtung nach Anspruch 1,
wobei der Hauptsensor (5) eine höhere Messgenauigkeit als der Nebensensor (6) aufweist.

3. Vorrichtung nach zumindest einem der vorherigen Ansprüche,
wobei der Hauptsensor (5) eine größere thermische Masse als der Nebensensor (6) besitzt.

4. Vorrichtung nach zumindest einem der vorherigen Ansprüche,
wobei der Hauptsensor (5) als ein Pt Sensor, vorzugsweise ein Pt 100, realisiert ist.

5. Vorrichtung nach zumindest einem der vorherigen Ansprüche,
wobei der Hauptsensor (5) und Nebensensor (6) elektrische Anschlüsse besitzen, wobei die Anschlüsse des Hauptsensors (5) und Nebensensors (6) an zwei separate Eingänge der Auswerte-/Transmittereinheit (7) angeschlossen sind.

6. Vorrichtung nach Anspruch 5,
wobei der elektrische Anschluss des Hauptsensors (5) an die Auswerte-/Transmittereinheit (7) mit drei oder maximal vier Leitern realisiert ist.

7. Vorrichtung nach zumindest einem der vorherigen Ansprüche,
wobei das metallische Messrohr (3) als ein Schutzrohr (8) ausgestaltet ist.

8. Vorrichtung nach Anspruch 7,
wobei das Schutzrohr (8) ein Messeinsatzrohr (9) enthält,
und wobei das Messeinsatzrohr (10) den Hauptsensor (5) und den Nebensensor (6) enthält.

9. Vorrichtung nach Anspruch 8,
wobei das Messeinsatzrohr (9) und das Schutzrohr (8) so ausgestaltet sind, dass das Messeinsatzrohr (9) im Schutzrohr (8) zentriert ist.

10. Vorrichtung nach Anspruch 8 und 9,
wobei am Messeinsatzrohr (9) eine Wärmeleitfolie (10) befestigt ist,
vorzugsweise auf der zum Schutzrohr (8) zeigenden Seite des Bodens des Messeinsatzrohrs (9).

11. Verfahren zur Bestimmung der Temperatur eines Mediums (1) in einem Rohr oder in einem Behälter,
wobei die Vorrichtung in eine Rohr- oder Behälterwand (2) einbaubar oder einsetzbar ist,
wobei das Verfahren zur Bestimmung der Temperatur eine Vorrichtung mit den Merkmalen nach zumindest einem der Ansprüche 1-10 benutzt,
wobei der Messwert ($T_H$) des Hauptsensors (5) und der Messwert ($T_N$) des Nebensensors (6) der Auswerte-/Transmittereinheit (7) übermittelt werden,
wobei zunächst die Überwachung der Isolation der Vorrichtung, und anschließend eine Korrektur des Einbaufehlers vorgenommen wird, indem
in einem ersten Verfahrensschritt die Differenz ($\Delta T$) der Messwerte von Hauptsensor (5) und Nebensensor (6) von der Auswerte-/Transmittereinheit (7) bestimmt wird, wobei in Abhängigkeit vom Ergebnis folgender zweiter Verfahrensschritt durchgeführt wird:

a) Falls der Betrag der Differenz ($|\Delta T|$) der Messwerte von Hauptsensor (5) und Nebensensor (6) größer als ein erster vorgegebener Grenzwert ($\Delta T_{max}$) ist: Ausgabe einer Fehlermeldung über die Integrität der Isolation der Vorrichtung.

b) Falls der Betrag der Differenz ($|\Delta T|$) der Messwerte von Hauptsensor (5) und Nebensensor (6) kleiner als ein zweiter vorgegebener Grenzwert ($\Delta T_{min}$) ist: Bestimmung der Temperatur ($T_M$) des Mediums (1) als Temperatur ($T_H$) des Hauptsensors (5)

c) Falls der Betrag der Differenz ($|\Delta T|$) der Messwerte von Hauptsensor (5) und Nebensensor (6) im Bereich zwischen dem zweiten vorgegebenen Grenzwert ($\Delta T_{min}$) und dem ersten vorgegebenen Grenzwert ($\Delta T_{max}$) liegt:

• Bestimmung der korrigierten Temperatur ($T_{H,korr}$) des Hauptsensors (5) gemäß $T_{H,korr} = T_H + K_H \, \Delta T$, wobei der Korrekturfaktor ($K_H$) zur Korrektur des Hauptsensors (5) in der Auswerte/Transmittereinheit (7) hinterlegt ist

• Bestimmung der korrigierten Temperatur ($T_{N,korr}$) des Nebensensors (6) gemäß $T_{N,korr} = T_N + K_N \, \Delta T$, wobei der Korrekturfaktor ($K_N$) zur Korrektur des Nebensensors (6) in der Auswerte-/Transmittereinheit (7) hinterlegt ist

• Bestimmung der Temperatur des Mediums $T_M$ als Mittelwert der korrigierten Temperatur von Haupt- (5) und Nebensensor (6): $T_M = \frac{1}{2}(T_{H,korr} + T_{N,korr})$

12. Verfahren nach Anspruch 11,
wobei der Hauptsensor (5) und der Nebensensor (6) eine Drift erfahren,
wobei die Rate der Drift des Nebensensors (6) in dem vom Medium (1) angenommenen Temperaturbereich mindestens um einen Faktor 10 kleiner ist als die Rate der Drift des Hauptsensors (5).

13. Verfahren nach Anspruch 12,
wobei ein vorgegebener unkorrigierter Temperaturwert ($T_N^{kal.}$) des Nebensensors (6) sowie der dazu gehörige unkorrigierte Temperaturwert ($T_H^{kal.}$) des Hauptsensors (5) in der Auswerte-/Transmittereinheit (7) hinterlegt werden,
wobei für den Fall, dass der Betrag der Differenz ($|\Delta T|$) der Messwerte von Hauptsensor (5) und Nebensensor (6) im Bereich zwischen dem zweiten vorgegebenen Grenzwert ($\Delta T_{min}$) und dem ersten vorgegebenen Grenzwert ($\Delta T_{max}$) liegt,
und dass der Nebensensor (6) den vorgegebenen unkorrigierten Temperaturwert ($T_N^{kal.}$) des Nebensensors (6) durchläuft und der unkorrigierte Messwert des Hauptsensors (5) um einen vorgegebenen Grenzwert vom dazu gehörigen unkorrigierten Temperaturwert ($T_H^{kal.}$) des Hauptsensors (5) abweicht,
eine Meldung über die Drift des Hauptsensors (5) ausgegeben wird, und der unkorrigierte Messwert des Hauptsensors (5) auf den unkorrigierten Temperaturwert ($T_H^{kal.}$) nachgeführt wird, welcher zu dem vorgegebenen unkorrigierten Temperaturwert ($T_N^{kal.}$) des Nebensensors (6) gehört.

14. Verfahren nach Anspruch 11 oder 12,
wobei der zeitliche Verlauf der unkorrigierten Messwerte von Hauptsensor (5) und Nebensensor (6) in der Auswerte-/Transmittereinheit (7) gespeichert werden.

15. Verfahren nach Anspruch 14,
wobei für den Fall, dass der Betrag der Differenz ($|\Delta T|$) der Messwerte von Hauptsensor (5) und Nebensensor (6) im Bereich zwischen dem zweiten vorgegebenen Grenzwert ($\Delta T_{min}$) und dem ersten vorgegebenen Grenzwert ($\Delta T_{max}$) liegt,
und dass der zeitliche Verlauf der unkorrigierten Messwerte von Hauptsensor (5) und Nebensensor (6) in einer vorgegebenen Zeitspanne um mehr als einen vorgegebenen Grenzwert von einem parallelen Verlauf abweicht,
eine Meldung über eine Drift des Hauptsensors (5) ausgegeben wird, und die unkorrigierten Messwerte des Hauptsensors (5) auf einen zu den unkorrigierten Messwerten des Nebensensors (6) parallelen Verlauf nachgeführt werden.

## Claims

1. Apparatus designed to determine the temperature of a medium (1) in a tube or in a vessel,
wherein the apparatus can be mounted or inserted in a tube or vessel wall (2), with a measuring tube projecting into the medium (1),
said measuring tube being closed by a measuring tube floor (4) at the end facing towards the medium (1),
with a resistance-based temperature sensor as a main sensor (5) and a thermoelectric voltage-based temperature sensor as a secondary sensor (6),
wherein the main sensor (5) and the secondary sensor (6) transmit their measured values to an evaluation/transmitter unit (7),
wherein the main sensor (5) and the secondary sensor (6) are arranged in the measuring tube (3) in relation to the longitudinal axis of the measuring tube (3) with a fixed offset in relation to one another, and the main sensor (5) is mounted closer to the measuring tube floor (4) than the secondary sensor (6),
wherein the main sensor (5) and the secondary sensor (6) each has an electrical measuring circuit, said circuits being electrically isolated in relation to the measuring tube (3), wherein changes to the electrical isolation of the measuring circuits differently affect the measured values of the main sensor (5) and of the secondary sensor (6), and wherein the evaluation/transmitter unit (7) is designed to generate an error message concerning the integrity of the apparatus with regard to the electrical isolation if the value of the difference ($|\Delta T|$) between the measured values of the main sensor (5) and of the secondary sensor (6) exceed a first predefined threshold ($\Delta T_{max}$) and wherein the apparatus is designed to correct a mounting error (EF) using the main sensor (5) and the secondary sensor (6) arranged along the longitudinal axis at an fixed offset in relation to one another.

2. Apparatus as claimed in Claim 1,
wherein the main sensor (5) has a higher measuring accuracy than the secondary sensor (6).

3. Apparatus as claimed in at least one of the previous Claims,
wherein the main sensor (5) has a greater thermal mass than the secondary sensor (6).

4. Apparatus as claimed in at least one of the previous Claims,
wherein the main sensor (5) is implemented as a Pt sensor, preferably a Pt 100.

5. Apparatus as claimed in at least one of the previous Claims,
wherein the main sensor (5) and the secondary sensor (6) have electrical connections, wherein the connections of the main sensor (5) and of the secondary sensor (6) are connected to two separate inputs of the evaluation/transmitter unit (7).

6. Apparatus as claimed in Claim 5,
wherein the electrical connection of the main sensor (5) to the evaluation/transmitter unit (7) is implemented with three or at most with four wires.

7. Apparatus as claimed in at least one of the previous Claims,
wherein the metal measuring tube (3) is designed as a protection tube (8).

8. Apparatus as claimed in Claim 7,
wherein the protection tube (8) contains a measuring insert tube (9),
and wherein the measuring insert tube (9) contains the main sensor (5) and the secondary sensor (6).

9. Apparatus as claimed in Claim 8,
wherein the measuring insert tube (9) and the protection tube (8) are designed in such a way that the measuring insert tube (9) is centered in the protection tube (8).

10. Apparatus as claimed in Claim 8 or 9,
wherein a thermal conductive foil (10) is secured on the measuring insert tube (9), preferably on the side of the bottom of the measuring insert tube (9) facing towards the protection tube (8).

11. Procedure designed to determine the temperature of a medium (1) in a tube or a vessel,
wherein the apparatus can be mounted or inserted into a tube or vessel wall (2),
wherein the procedure for determining the temperature uses an apparatus with the characteristics as claimed in at least one of the Claims 1 to 10,
wherein the measured value (TH) of the main sensor (5) and the measured value ($T_N$) of the secondary sensor (6) are transmitted to the evaluation/transmitter unit (7),
wherein the insulation of the apparatus is first monitored and then a correction of the mounting error is performed in that, in a first procedural step, the difference ($\Delta T$) of the measured values of the main sensor (5) and of the secondary sensor (6) are determined by the evaluation/transmitter unit (7), wherein the subsequent second step is performed depending on the result of the first step:

a) If the value of the difference ($|\Delta T|$) of the measured values of the main sensor (5) and of the secondary sensor (6) is greater than a first predefined limit value ($\Delta T_{max}$): an error message concerning the integrity of the insulation of the apparatus is output.

b) If the value of the difference ($|\Delta T|$) of the measured values of the main sensor (5) and of the secondary sensor (6) is less than a second predefined limit value ($\Delta T_{min}$): the temperature ($T_M$) of the medium (1) is determined as the temperature ($T_H$) of the main sensor (5).

c) If the value of the difference ($|\Delta T|$) of the measured values of the main sensor (5) and of the secondary sensor (6) is in the range between the second predefined limit value ($\Delta T_{min}$) and the first predefined limit value ($\Delta T_{max}$):

• The corrected temperature ($T_{H,korr}$) of the main sensor (5) is determined according to the following formula: $T_{H,korr} = T_H + K_H \Delta T$, wherein the correction factor ($K_H$) for the correction of the main sensor (5) is saved in the evaluation/transmitter unit (7)

• The corrected temperature ($T_{N,korr}$) of the secondary sensor (6) is determined according to the following formula: $T_{N,korr} = T_N + K_N \Delta T$, wherein the correction factor ($K_N$) for the correction of the secondary sensor (6) is saved in the evaluation/transmitter unit (7)

• The temperature of the medium $T_M$ is determined as the average value of the corrected temperature of the main sensor (5) and of the secondary sensor (6) : $T_M = \frac{1}{2} (T_{H,korr} + T_{N,korr})$.

12. Procedure as claimed in Claim 11,
wherein the main sensor (5) and the secondary sensor (6) experience a drift,
wherein the rate of the drift of the secondary sensor (6) in the temperature range adopted by the medium (1) is smaller by at least a factor of 10 than the rate of the drift of the main sensor (5).

13. Procedure as claimed in Claim 12,
wherein a predefined non-corrected temperature value ($T_N{}^{kal.}$) of the secondary sensor (6) as well as the corresponding non-corrected temperature value ($T_H{}^{kal.}$) of the main sensor (5) are saved in the evaluation/transmitter unit (7),
wherein, in the event that the value of the difference ($|\Delta T|$) of the measured values of the main sensor (5) and of the secondary sensor (6) is in the range between the second predefined limit value ($\Delta T_{min}$) and the first predefined limit value ($\Delta T_{max}$),
and in the event that the secondary sensor (6) passes through the predefined non-corrected temperature value ($T_N{}^{kal.}$) of the secondary sensor (6) and the non-corrected measured value of the main sensor (5) deviates by a predefined limit value from the associated non-corrected temperature value ($T_H{}^{kal.}$) of the main sensor (5),
a message concerning a drift of the main sensor (5) is output, and the non-corrected measured value of the main sensor (5) is adjusted to the non-corrected temperature value ($T_H{}^{kal.}$), which belongs to the predefined non-corrected temperature value ($T_N{}^{kal.}$) of the secondary sensor (6).

14. Procedure as claimed in Claim 11 or 12,
wherein the curve over time of the non-corrected measured values of the main sensor (5) and of the secondary sensor (6) are saved in the evaluation/transmitter unit (7).

15. Procedure as claimed in Claim 14,
wherein, in the event that the value of the difference ($|\Delta T|$) of the measured values of the main sensor (5) and the secondary sensor (6) is in the range between the second predefined threshold ($\Delta T_{min}$) and the first predefined threshold ($\Delta T_{max}$),
and in the event that the curve over time of the non-corrected measured values of the main sensor (5) and of the secondary sensor (6) deviate by more than a predefined limit value from a parallel curve in a predefined period of time, a message concerning a drift of the main sensor (5) is output, and the non-corrected measured values of the main sensor (5) are adjusted to a curve parallel to the non-corrected measured values of the secondary sensor (6).

**Revendications**

1. Dispositif destiné à la détermination de la température d'un produit (1) dans un tube ou dans un réservoir,

le dispositif pouvant être monté ou inséré dans une paroi de tube ou de réservoir (2),
avec un tube de mesure pénétrant dans le produit (1),
lequel tube de mesure est fermé par un fond de tube de mesure (4) à l'extrémité orientée vers le produit (1),
avec un capteur de température, basé sur une résistance, en tant que capteur principal (5) et un capteur de température, basé sur une tension thermoélectrique, en tant que capteur secondaire (6),
le capteur principal (5) et le capteur secondaire (6) transmettant leurs valeurs mesurées à une unité d'exploitation / de transmetteur (7),
le capteur principal (5) et le capteur secondaire (6) étant disposés à l'intérieur du tube de mesure (3) par rapport à l'axe longitudinal du tube de mesure (3) avec un décalage fixe l'un par rapport à l'autre, et le capteur principal (5) étant monté plus près du fond de tube de mesure (4) que le capteur secondaire (6),
le capteur principal (5) et le capteur secondaire (6) comportant chacun un circuit de mesure électrique, lesquels circuits sont isolés électriquement par rapport au tube de mesure (3), des modifications de l'isolation électrique des circuits de mesure ayant une influence différente sur les valeurs mesurées du capteur principal (5) et du capteur secondaire (6),
et l'unité d'exploitation / de transmetteur (7) étant conçue pour générer un message d'erreur concernant l'intégrité du dispositif par rapport à l'isolation électrique si la valeur de la différence ($|\Delta T|$) entre les valeurs mesurées du capteur principal (5) et du capteur secondaire (6) dépasse un premier seuil ($\Delta T_{max}$) prédéfini
et le dispositif étant conçu pour corriger une erreur de montage (EF) au moyen du capteur principal (5) et du capteur secondaire (6) disposés le long de l'axe longitudinal avec un décalage fixe l'un par rapport à l'autre.

2. Dispositif selon la revendication 1,
pour lequel le capteur principal (5) présente une précision de mesure supérieure à celle du capteur secondaire (6).

3. Dispositif selon au moins l'une des revendications précédentes,
pour lequel le capteur principal (5) possède une masse thermique supérieure à celle du capteur secondaire (6).

4. Dispositif selon au moins l'une des revendications précédentes,
pour lequel le capteur principal (5) est réalisé en tant que sonde Pt, de préférence une Pt 100.

5. Dispositif selon au moins l'une des revendications précédentes,
pour lequel le capteur principal (5) et le capteur secondaire (6) sont munis de connexions électriques, les connexions du capteur principal (5) et du capteur secondaire (6) étant raccordées à deux entrées séparées de l'unité d'exploitation / de transmetteur (7).

6. Dispositif selon la revendication 5,
pour lequel la connexion électrique du capteur principal (5) sur l'unité d'exploitation / de transmetteur (7) est réalisée avec trois ou au maximum quatre conducteurs.

7. Dispositif selon au moins l'une des revendications précédentes,
pour lequel le tube de mesure métallique (3) est conçu en tant que tube de protection (8).

8. Dispositif selon la revendication 7,
pour lequel le tube de protection (8) contient un tube d'insert de mesure (9), et pour lequel le tube d'insert de mesure (9) contient le capteur principal (5) et le capteur secondaire (6).

9. Dispositif selon la revendication 8,
pour lequel le tube d'insert de mesure (9) et le tube de protection (8) sont conçus de telle sorte que le tube d'insert de mesure (9) est centré dans le tube de protection (8).

10. Dispositif selon la revendication 8 ou 9,
pour lequel une feuille thermo-conductrice (10) est fixée sur le tube d'insert de mesure (9), de préférence sur le côté - orienté vers le tube de protection (8) - du fond du tube d'insert de mesure (9).

11. Procédé destiné à la détermination de la température d'un produit (1) dans un tube ou dans un réservoir,
pour lequel le dispositif peut être monté ou inséré dans une paroi de tube ou de réservoir (2),
lequel procédé est destiné à la détermination de la température d'un dispositif avec les caractéristiques selon au moins l'une des revendications 1 à 10,
la valeur mesurée ($T_H$) du capteur principal (5) et la valeur mesurée ($T_N$) du capteur secondaire (6) étant transmises à l'unité d'exploitation / de transmetteur (7),
la surveillance de l'isolation du dispositif étant réalisée dans un premier temps, suivie d'une correction de l'erreur de montage, en ce qu'est déterminée, dans une première étape de procédé, par l'unité d'exploitation / de transmetteur (7), la différence ($\Delta$T) des valeurs mesurées du capteur principal (5) et du capteur secondaire (6), la deuxième étape de procédé suivante étant réalisée en fonction du résultat de la première étape :

a) Si la valeur de la différence ($|\Delta$T$|$) des valeurs mesurées du capteur principal (5) et du capteur secondaire (6) est supérieure à un premier seuil prédéfini ($\Delta T_{max}$) : émission d'un message d'erreur concernant l'intégrité de l'isolation du dispositif.
b) Si la valeur de la différence ($|\Delta$T$|$) des valeurs mesurées du capteur principal (5) et du capteur secondaire (6) est inférieure à un deuxième seuil prédéfini ($\Delta T_{min}$) : détermination de la température ($T_M$) du produit (1) en tant que température (TH) du capteur principal (5).
c) Si la valeur de la différence ($|\Delta$T$|$) des valeurs mesurées du capteur principal (5) et du capteur secondaire (6) se situe dans la zone entre le deuxième seuil prédéfini ($\Delta T_{min}$) et le premier seuil prédéfini ($\Delta T_{max}$) :

• Détermination de la température corrigée ($T_{H,korr}$) du capteur principal (5) selon la formule suivante : $T_{H,korr} = T_H + K_H \Delta T$, le facteur de correction ($K_H$) pour la correction du capteur principal (5) étant enregistré dans l'unité d'exploitation / de transmetteur (7).
• Détermination de la température corrigée ($T_{N,korr}$) du capteur secondaire (6) selon la formule suivante : $T_{N,korr} = T_N + K_N \Delta T$, le facteur de correction ($K_N$) pour la correction du capteur secondaire (6) étant enregistré dans l'unité d'exploitation / de transmetteur (7)
• Détermination de la température du produit $T_M$ en tant que valeur moyenne de la température corrigée du capteur principal (5) et du capteur secondaire (6) : $T_M = \frac{1}{2} (T_{H,korr} + T_{N,korr})$.

12. Procédé selon la revendication 11,
pour lequel le capteur principal (5) et le capteur secondaire (6) subissent une dérive, la vitesse de dérive du capteur secondaire (6) dans la gamme de température adoptée par le produit (1) étant inférieure d'au moins un facteur 10 que la vitesse de dérive du capteur principal (5).

13. Procédé selon la revendication 12,
pour lequel une valeur de température non corrigée ($T_N^{kal}$) prédéfinie du capteur secondaire (6) ainsi que la valeur de température non corrigée ($TH^{kal.}$) correspondante du capteur principal (5) sont enregistrées dans l'unité d'exploitation / de transmetteur (7),
pour lequel, dans le cas où la valeur de la différence ($|\Delta$T$|$) des valeurs mesurées du capteur principal (5) et du capteur secondaire (6) se situe dans la zone entre le deuxième seuil prédéfini ($\Delta T_{min}$) et le premier seuil prédéfini ($\Delta T_{max}$), et dans le cas où le capteur secondaire (6) passe par la valeur de température non corrigée ($T_N^{kal.}$) prédéfinie du capteur secondaire (6) et la valeur mesurée non corrigée du capteur principal (5) s'écarte d'un seuil prédéfini de la valeur de température non corrigée associée ($TH^{kal.}$) du capteur principal (5),
un message concernant une dérive du capteur principal (5) est émis, et la valeur mesurée non corrigée du capteur principal (5) est ajustée à la valeur de température non corrigée ($TH^{kal.}$), laquelle valeur appartient à la valeur de température non corrigée prédéterminée ($T_N^{kal.}$) du capteur secondaire (6).

14. Procédé selon la revendication 11 ou 12,
pour lequel la courbe dans le temps des valeurs mesurées non corrigées du capteur principal (5) et du capteur secondaire (6) est enregistrée dans l'unité d'exploitation / de transmetteur (7).

15. Procédé selon la revendication 14,
pour lequel, dans le cas où la valeur de la différence ($|\Delta$T$|$) des valeurs mesurées par le capteur principal (5) et le capteur secondaire (6) se situe dans la zone entre le deuxième seuil prédéfini ($\Delta T_{min}$) et le premier seuil prédéfini ($\Delta T_{max}$), et dans le cas où la courbe dans le temps des valeurs mesurées non corrigées du capteur principal (5) et du capteur secondaire (6) s'écarte, dans une plage de temps prédéfinie, de plus d'un seuil prédéfini par rapport à une courbe parallèle, un message concernant une dérive du capteur principal (5) est émis, et les valeurs mesurées non corrigées du capteur principal (5) sont ajustées sur une courbe parallèle aux valeurs mesurées non corrigées du capteur secondaire (6).

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- DE 19544880 A1
- DE 19509105 C2
- DE 19939757 A1
- EP 0775897 A1
- DE 102009058282
- DE 102012103952
- DE 202009012292 U1

**In der Beschreibung aufgeführte Nicht-Patentliteratur**

- **K. IRRGANG ; L. MICHALOWSKY.** Temperatur-messpraxis mit Widerstands-thermometern und Thermoelementen. Vulkan-Verlag, 2004